**(19)** Europäisches Patentamt

European Patent Office

Office européen des brevets

**(11)** **EP 1 279 640 A1**

**(12)** **EUROPEAN PATENT APPLICATION**
published in accordance with Art. 158(3) EPC

**(43)** Date of publication:
**29.01.2003 Bulletin 2003/05**

**(51)** Int Cl.$^7$: **C01B 3/58**, A61L 9/00

**(21)** Application number: **00912675.6**

**(22)** Date of filing: **31.03.2000**

**(86)** International application number:
**PCT/ES00/00117**

**(87)** International publication number:
**WO 01/072633 (04.10.2001 Gazette 2001/40)**

**(84)** Designated Contracting States:
**AT BE CH CY DE DK ES FI FR GB GR IE IT LI LU
MC NL PT SE**
Designated Extension States:
**AL LT LV MK RO SI**

**(71)** Applicant: **David Systems Technology S.L.**
**28006 Madrid (ES)**

**(72)** Inventors:
 • **FURKASOV, Dimitri**
 **E-28006 Madrid (ES)**

 • **KALINNIKOV, Alexander**
 **E-28006 Madrid (ES)**
 • **BORONOV, Garri**
 **E-28006 Madrid (ES)**
 • **BLACH BIZOSO, Ricardo**
 **E-28006 Madrid (ES)**

**(74)** Representative: **Carpintero Lopez, Francisco**
**HERRERO & ASOCIADOS, S.L.**
**Alcalá, 35**
**28014 Madrid (ES)**

**(54)     SYSTEM FOR CONTROLLING AND ELIMINATING HYDROGEN**

**(57)**     The system provides for the monitoring and elimination of hydrogen and combustible gases in the air, with the help of catalysers, being implemented in an apparatus consisting of a passive hydrogen recombiner and a monitoring detector, in which use is made of the free convective feed of a recorded and eliminated gaseous mixture of components, the components having a construction of the same type, it being possible to locate the detector both inside and outside the recombiner.

FIG.1

## Description

## OBJECT OF THE INVENTION

The invention relates to a system on a basis of which it is possible to monitor the accumulation of hydrogen in the air, and also prevent the accumulation of hydrogen in that same medium above its lower flammability limit of 4% by volume. The process is carried out at the expense of maximum parameters in the process of hydrogen recombination, that is, greater working effectiveness at smaller overall dimensions and use of the least possible catalytic material. Process safety for hydrogen recombination is achieved with maximum hydrogen oxidation efficiency (practically 100%). The hydrogen content reading must be reduced rapidly, with the aim of characterising the structure of a gas mixture in the maximum volume, in order that it does not depend on external conditions and in order to employ for the concentration readings a minimum quantity of the working parameters measured immediately. All components of the apparatus at different parameters of maintenance and influence of the surroundings should not be sources of ignition or detonation of inflammable or explosive gas mixtures.

The hydrogen monitoring and elimination system as a whole is materialised in a complex apparatus necessary to prevent the build-up of hydrogen in the air at various locations. The system is proposed for the rapid elimination of hydrogen in an emergency, produced by a large concentration of hydrogen in an atmospheric location, and as a tool for a rapid and safe method for measuring the concentration of hydrogen in a gaseous medium which contains oxygen. The apparatus expounded is proposed as an addition to the standard cooling systems for hydrogen plants in normal conditions and as a basic apparatus in an emergency originated by an interruption in the electricity supply, and under conditions in which it is impossible to employ the cooing system in an effective manner. The apparatus is constructed from two basic components:

Passive catalytic hydrogen recombiner (RCP);
Thermo-catalytic hydrogen detector (DTC)

The DTC and RPC apparatus are based on the known principles of the catalytic combustion of hydrogen with enriched air, in the case of the DTC, and for determining the concentration the reading is used for the thermal effect of a catalytic reaction.

The system is applicable as a safety means for preventing explosion by fire in several branches of industrial production, such as those in which explosive concentrations of hydrogen and combustible gases build up, including nuclear power stations that use water-cooled reactors, and also in the electrochemical industry, gas pumping stations, etc.

## BACKGROUND OF THE INVENTION

Catalytic detector measurement systems WS-85 and recombiners FR90-1500 are known from the firm SIEMENS, being based on the German Patent DE 3727207 A1 from 1989.

The majority of catalytic apparatus known for hydrogen removal are implemented in a duct with the catalytic solid located on the internal base (in particular in the FR90-1500). To indicate the progress of exothermal reaction of hydrogen oxidation in the catalyser, the gaseous mixture in the duct is heated. The heated gas, on expanding through the duct permits constant feeding of the external gas mixture to the base of the recombiner due to the principle of Archimedes.

The known recombiners (patent DE 372707 A1, 1989) utilise as catalyser flat metal modules and ceramic panel elements. To prevent the probable influence of the surroundings on the catalyser, the outermost faces of the cover are equipped with additional systems which open the catalyser only at the moment of the incident (increase in temperature or pressure). Systems of heat evacuation are used to prevent a probable conflagration of the incoming gas mixture which occurs with the overheating of the catalyses. The cover of the recombiner is employed as protection from the overheated catalyser during the oxidation of the environmental hydrogen.

In this manner, in developing the structure of the hydrogen recombiner under consideration, the authors aspired to achieve optimum hydrogen oxidation conditions immediately on the surface of the catalyser. Consequently, allowance was not made for all the processes resulting from the transport of hydrogen to a catalytic surface (hydrogen diffusion at the catalytic surface, convectional flows inside the cover of the recombiner).

The geometric structure of the highly regulated catalyser of the hydrogen recombiners considered, has as a consequence the formation of a stable boundary layer. As a result of the presence of a boundary layer, there is an essential diminution in the transfer of hydrogen through the boundary layer and, consequently, the reduction of the combustion rate of the hydrogen, as well as incomplete combustion. The incomplete combustion of hydrogen, can give rise to the conflagration of the mixture of hydrogen and hot air at the outlet, which is potentially dangerous, in relation with the hydrogen-air mixture burning at the lower end of the active modules of the recombiners under consideration. For a stable boundary layer, the hydrogen transfer rate at this location reaches significant magnitudes and essentially surpasses the heat transfer. This factor can also give rise to the destruction of the cotalyser coatings through local overheating.

On the other hand, the formation of a stable boundary layer on the catalyser walls gives rise to the displacement of the hydrogen-air flow to the core, which provokes the increase in the gas dynamic resistance of the system as a whole. The magnitude of a gas dynamic resistance for the natural convective systems determines the efficacy in the rate of the hydrogen-air flow through the catalyser and the efficiency of the recombiner.

As a result, the hydrogen recombiners developed are not optimal at a specific rate of combustion.

The known thermo-catalytic hydrogen detectors are employed coated with the thermo-resistance of the catalyser, or wire of a catalyst material heated by a current and included in the measuring apparatus. In the presence of an analysable mixture of combustible gases and oxygen, there is a catalytic reaction on a sensor surface, said reaction provoking the heating thereof. A characteristic signal of the presence of hydrogen is the change in the electrical resistances of the sensors, due to the increase of the temperature of the catalyser and to the change of balance in the measuring apparatus. With oxygen in excess, the rate of reaction depends linearly on the concentration of the combustible gases. However, heated naked filaments are not safe at a hydrogen conflagration ratio. Likewise, the presence of naked wires carrying electricity is not generally desirable. For this reason it is normal to find the sensors of a hydrogen detector insulated from an analysable medium and the measurements are carried out in a specially organised flow of analysable gas (gas feed at a constant velocity). For this purpose external inducers (fans etc.) are employed, or special covers of a porous material for feeding the analysed gas by diffusion to the sensors.

The use of such detectors directly in an analysable gaseous medium, presents specific difficulties because the response of the detector to the generation of a defined quantity of heat is determined by the thermal properties of a medium. Likewise, the response time of the detector to the appearance of hydrogen can be very long, especially for the diffusion detectors based on diffusion through the porous material. A characteristic signal of the presence of hydrogen is the change in an electrical resistance of the sensor in relation with an electrical resistance of the comparison element produced by the increase of the catalyser temperature.

The hydrogen detectors mentioned above have a number of drawbacks:

The hydrogen concentration is not measured directly in an analysable medium, and in a specially prepared probe.

The response time depends on the rate of diffusion of the hydrogen, or on the speed of preparation of a probe, and is sufficiently long.

The use of sensors, working under extreme conditions (a platinum filament and thermo-resistances carrying high electric current).

High cost.

## DESCRIPTION OF THE INVENTION

The system that is claimed, has been designed to overcome the aforementioned problems, being based on some means which permit the rate of combustion of the hydrogen and the safety to be increased, and also to reduce the cost of the corresponding hydrogen recombiner, while boosting safety, reliability and absence of taps of the test elements for a hydrogen detector.

The technical result of the hydrogen recombiner is achieved thanks to the activated high performance cellular materials (HPCM) employed as catalytic elements, these having an irregular three-dimensional spatial structure, which basically do not permit the generation of a stable boundary layer for dynamic gas flows, which leads to a substantial increase in the matter and heat transfer parameters when using HPCM catalysers, even when small in size. Selection of the catalyser permits development of a recombiner, optimal at the hydrogen combustion rate.

Recombiner safety is achieved through the choice of the metal as material for a solid porous catalyst. The high heat conductivity or the catalytic material facilitates the absence of specific points of overheating, which can constitute a source of ignition of the hydrogen.

The high hydrogen combustion rate is achieved in particular by the construction of a convective cover of the recombiner, which consists of two vertical walls -inner and outer. The space between them is filled with a heat-lagging material. The hydrogen combustion rate is determined by the speed of the hydrogen-air mixture through the catalyser, which results in a balancing of the gas dynamic resistance of the recombiner and an increase in the force of Archimedes. This latter force is determined by the temperature of the gas in the convective cover. If there is an appreciable loss of heat from the convective cover of the recombiner, the hydrogen combustion rate diminishes. The recombiner is insulated in order to avoid heat loss in the convective cover of the recombiner.

The solid catalyst is located in a suspended support thermally insulated relative to the convective cover of the recombiner in order to minimise the heat loss and facilitate the start of the catalytic combustion of the hydrogen as soon as the hydrogen appears.

The space inside the convective cover of the recombiner is divided into vertical divisions in two or more parts in order to prevent non-uniformity of the catalytic combustion under the through-section and the diminution of the efficacy of the recombiner.

It is known that the hydrogen combustion efficiency of the SIEMENS FR -90/1500 recombiner, the version most close to the patent DE 3727207 A1, does not exceed 0.4 nl/s in a hydrogen concentration of approximately 3% by volume and through-section of the convective cover of approximately 300 cm$^2$. Under the same conditions the hydrogen combustion efficiency for the recombiner of the invention reaches 0.8 nl/s.

The technical result for a hydrogen detector is achieved through the use of a natural convective flow to feed an analysable air to the sensors of a detector (the solid porous catalyst). Inside the cover, the explosion test electric heating element is positioned to organise a natural convective flow of an analysable air through a detector sensor.

The use of highly porous cellular materials (HPCM) with specially selected parameters, permits the necessary velocity of a convective flow.

The convective cover consists of two vertical walls - inner and outer-, in which the intermediate space is filled with a heat-lagging material for the purpose of minimising the heat loss and the electric power required for preliminary heating of the incoming gas flow and of the catalyser.

Detector safety is achieved through the choice of the metal as material for a porous catalyser. The high thermal conductivity of the catalytic material permits the absence of points with local overheating, which can be a source of hydrogen conflagration. With the same goal, the catalyser is situated in a suspended support thermally insulated relative to the hydrogen detector cover.

The difference in temperatures between the previously heated air flow and the catalyser, and the outgoing air flow after the catalyser, is measured in order to determine the concentration of hydrogen in the air. In the complete oxidation of hydrogen in a convective air flow, which takes place through the catalyser, there is a simple linear relationship between the difference in temperatures and the concentration:

$$C H2 = \frac{AT}{83,5} (3\&.\,\ast F2)$$

where, AT=measured difference in temperatures, $C_{H2}$= volumetric concentration of hydrogen.

The hydrogen detectors can be situated both outside and inside the convective cover of the recombiner, in this latter alternative the hot convective flow of the detector accelerates the start of the recombiner process in the presence of hydrogen. In the presence of hydrogen and with the recombiner working, the detector operating interval is essentially enlarged, if the convective flow of the recombiner is stronger, a greater volume of air is supplied.

The switching blocks contain thermocouple signal amplifiers and microprocessors for handling, storing and displaying the signal from the detectors, which can be used for a reading of the measurement of a complete hydrogen detector of the system.

As the active element of the hydrogen detector, use is made of highly porous cellular materials (HPCM).

## DESCRIPTION OF THE DRAWINGS

To complete the description being made and in order to assist in a better understanding of the characteristics of the invention, in accordance with a preferential example of practical embodiment thereof, some drawings are attached as an integral part of said description, in which drawings are shown by way of illustration and not restrictively, the following:

Figure 1.- Shows a representation in section on a vertical plane of the apparatus of the invention.

Figure 2.- Shows a detailed picture of how a monitoring detector is constructed, represented in cross section, and embodied according to the system of the invention.

Figure 3.- Shows the basic flow diagram for the connection of the detector to the data monitoring.

## PREFERENTIAL EMBODIMENT OF THE INVENTION

In the figures referred to above, it is possible to see how the system for monitoring and elimination of hydrogen, implemented in the apparatus, includes two basic components, one corresponding to that termed recombiner A and the other corresponding to the detector D of the recombiner.

Recombiner A, in accordance with the invention, represents the vertically mounted duct with double walls which are fabricated in a corrosion-proof material, for example stainless steel. The inner walls of said recombiner are convective covers (1), with which the total dimensions of the convective cover are calculated with the objective of attaining the efficiency of the apparatus necessary and reading for a location, for example, the through-section of 180250 mm$^2$ and weight of 1500.

The solid catalyst (2), as a module situated perpendicular to the incoming flow is located at the bottom of the convective cover. The solid catalyst is inserted in the cartridge (3) in order to prevent the transfer of heat to the walls of the convective cover. The cartridge (3) has two symmetrical structures, in each of which there are long runs of wire (4). The cross section of the transversal passage of the cartridge is less than the geometrical area of the solid catalyst. The solid catalyst is inserted between the upper and lower structures of the cartridge, which get progressively closer together. The cartridge (3) with solid catalyst (2) completely overshoots the through-section of the convective cover, such that it prevents the direct gas flow to pass outside the catalyser.

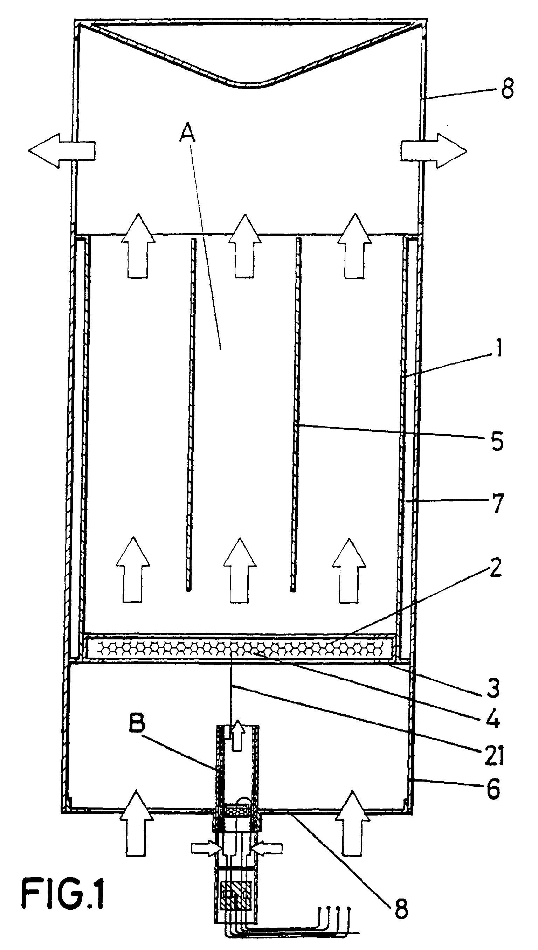

Over the solid catalyst (2), and above the separation of the upper convective cover there are firmly enclosed metal partitions (5), which are located along the axes of the convective cover (1) in a manner parallel to the flow of the gas mixture. The partitions (5) divide the interior volume of the convective cover into two or more parts in an association of the sectional area of the convective cover. For example, for a specimen recombiner in the figure 1, the through-section of the convective cover is divided into three parts.

The convective cover of the recombiner (1) is located on the external protective cover of the recombiner (6), between which there is a space of 10-20 mm. The space between the internal and external protective convective covers is filled with a heat-lagging material or substance (7), for example air. The upper and lower separations of the protective cover of the recombiner have wire mesh mouths (8).

In the recombiner "A" in the bottom between the cartridge with catalytic solid (2 and 3) and the wire mesh mouthpiece (8), monitoring detector "B" is located.

Monitoring detector "B" has two operational versions -internal and external-, which differ in the presence of safety screens and wire meshes (external).

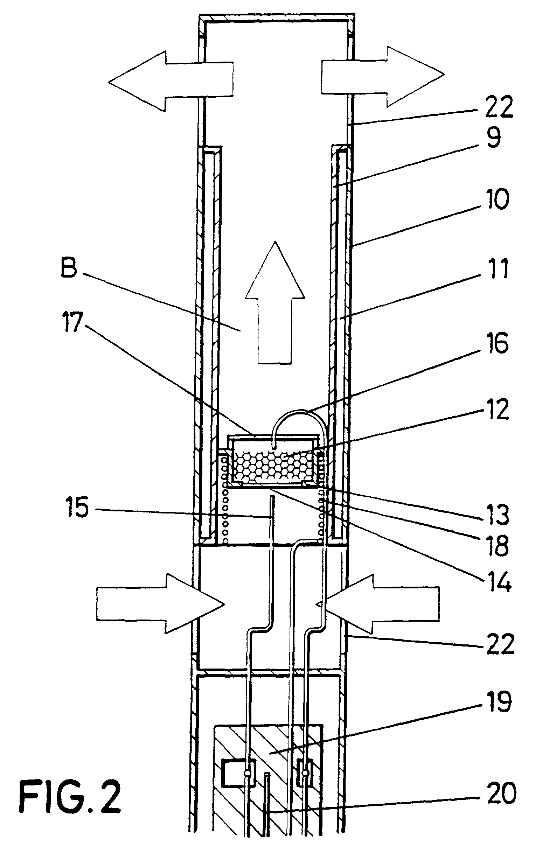

Monitoring detector "B" as a whole comprises solid catalyst (12) like a disc situated on the bottom of the double-walled vertical duct. The walls are fabricated in a corrosion-proof material, for example, stainless steel convective cover). The convective cover is designed to organise the natural convective flow of an analysable mixture through the sensing element of the detector. By way of example, in figure 2, the overall dimensions of the detector are: 100 mm in height and 30 mm in diameter.

The convective cover of the detector has inlet and outlet openings on the side area beside the end faces closed off by a wire mesh (22). Between the wall of the cover of the internal (9) and external (10) detector there is a space, which is filled with heat-lagging material or with air (11).

The solid catalyst (12), like the disc, is installed perpendicular to the incoming flow to the metallic cartridge-cover (13) separated a little from the walls. The electric heating element (18) is located between the internal wall of the cover of the detector and the cartridge-cover (13). At the bottom and at the top of the solid catalyst are fitted the wire meshes-screens-heat exchangers (14 and 17).

The connection of the working thermocouple (16) measures the temperature of the incoming gas flow and is installed on the centre lines of the construction below the screen of the heat exchanger (14). The thermocouple (16) measures the temperature of the solid catalyst (12) or the temperature of the outgoing gas flow. The connection of the working thermocouple (16) is installed between the solid catalyst and the screen-heat exchanger (17) on an axis with the thermocouple (15). The cold junction connections of thermocouple 15 and 16 are brought out in the hermetic zone of the thermostat (19). The outputs from the thermocouples and both outputs of the heater are fed via a hermetic power point. In the construction of the detector, the thermocouple (20) is employed to measure the temperature of the hermetic zone of the thermostat. The thermocouple (20) is included in the structure of the cable-carrying conductors. For examining a recombiner catalyser usefully and for measuring the concentration of hydrogen at high values greater than 2% by volume, the thermocouple (21) can be included in the structure of the detector. The connection of the thermocouple in operation (21) is installed the solid catalyst (2), and the cold junction connection is installed in zone (19).

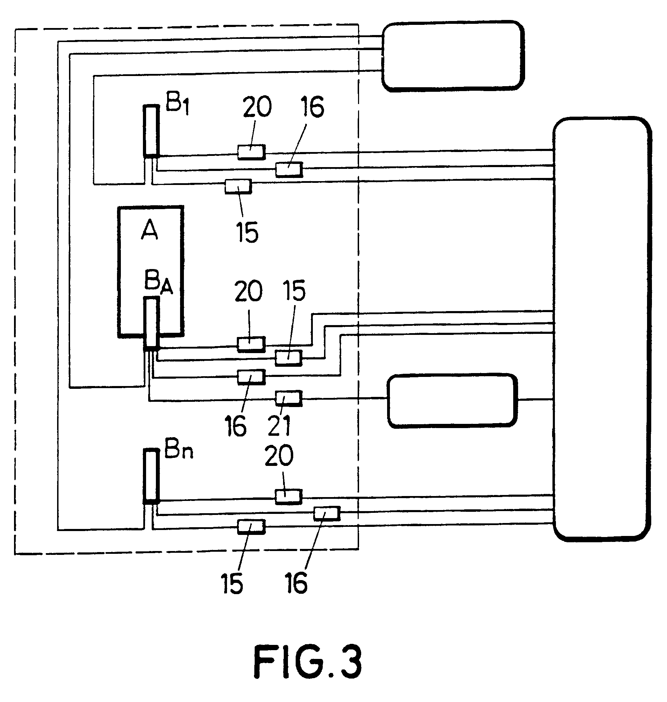

In figure 3 the flow diagram is shown for a joint arrangement of the elements of the invention. At the spot indicated, recombiner "A" is installed, which comprises an internal version of monitoring detector "$B_A$". In the apparatus in acccordance with the invention, use is accepted of a significant quantity of external monitoring detectors "$B_1$-$B_n$" which are situated in zones where hydrogen leaks are probable. The power supplies for the detector heaters are brought over lines not in connection with the measurement channels. The signals from the thermocouples 15, 16, 20 and 21 (internal version "$B_A$") are taken to the signal reception and monitoring block which can be, for example, a system based on ADC and personal computer or business local area networks. The "recombiner monitoring" coupling permits, with the appropriate use of the thermocouple 21, monitoring of the hydrogen content in an emergency situation (concentration of hydrogen greater than 2% by volume), due merely to the heating of the catalyser of the recombiner (2) with no additional energy supply. The "recombiner monitoring" coupling is also a useful passive correction element of the recombiner, that is, in readings of hydrogen concentration greater than 1% by volume in the detectors "$0B_A$, $B_1$-$B_n$", the thermocouple 21 ought to fix an increase of the temperature of the solid catalytic (2) in the recombiner.

**Claims**

1. System for monitoring and elimination of hydrogen, intended for monitoring the accumulation of hydrogen in the air, and also for preventing said accumulation from surpassing its lower flammability limit, and also eliminate said hydrogen and combustible gases in the air, is **characterised in that** it comprises two basic components, one of them is a passive catalytic hydrogen recombiner, and the other is a thermo-catalytic hydrogen detector, the recombiner including a vertical duct determining a convective cover (1) the through-section of which is completely covered with a solid catalyst contained in the actual thermo-catalytic detector (12), said solid catalyst being constituted of highly porous cellular materials.

2. System for monitoring and elimination of hydrogen, in accordance with claim 1, **characterised in that** the solid catalyst has characteristic parameters corresponding to a mesh size not less than 2 mm, an article passing size not greater than 1, and a portion width not less than three mesh sizes.

3. System for monitoring and elimination of hydrogen, in accordance with claims 1 and 2, **characterised in that** the solid catalyst is contained in spongy metal.

4. System for monitoring and elimination of hydrogen, in accordance with claims 1 to 3, **characterised in that** the solid catalyst is constructed and covered by a layer of catalyser and activating components.

5. System for monitoring and elimination of hydrogen, in accordance with claims 1 to 4, **characterised in that** the convective cover of the recombiner consists of two vertical walls, one internal and the other external, the space between being filled with a heat-lagging material.

6. System for monitoring and elimination of hydrogen, in accordance with claims 1 to 5, **characterised in that** the solid catalyst is situated in a heat-insulating support suspended relative to the convective cover.

7. System for monitoring and elimination of hydrogen, in accordance with claims 1 to 6, **characterised in that** the space within the convective cover of the recombiner comes with a series of vertical divisions located in two or more parts.

8. System for monitoring and elimination of hydrogen, in accordance with claim 1, **characterised in that** the catalytic detector for monitoring and eliminating the combustible gases, contains a heated solid catalyst, in the form of modules and covering the through-section of the convective cover.

9. System for monitoring and elimination of hydrogen, in accordance with claim 8, **characterised in that** the solid catalyst is made of highly porous cellular materials.

10. System for monitoring and elimination of hydrogen, in accordance with claims 8 and 9, **characterised in that** the solid catalyst is made of a metallic honeycomb.

11. System for monitoring and elimination of hydrogen, in accordance with claims 8 and 10, **characterised in that** the solid catalyst is alloyed and covered in a layer of catalyser and activating components.

12. System for monitoring and elimination of hydrogen, in accordance with claims 8 to 11, **characterised in that** the solid catalyst includes characteristic parameters with a mesh size not less than 2 mm, a passing article size not greater than 1 and a module width not less than three mesh sizes.

13. System for monitoring and elimination of hydrogen, in accordance with claims 8 to 12, **characterised in that** an electric heating element is included, situated in the interior of the convective cover, intended for the pre-heating of a flow of incoming gas and catalyst laminas.

14. System for monitoring and elimination of hydrogen, in accordance with claims 8 to 13, **characterised in that** the intermediate space defined between the vertical internal and external walls of the convective cover, is filled with a heat-lagging material.

15. System for monitoring and elimination of hydrogen, in accordance with claims 8 to 14, **characterised in that** the solid catalyst is located in a thermally insulating support suspended relative to the covers.

16. System for monitoring and elimination of hydrogen, in accordance with claims 8 to 15, **characterised in that** the solid catalyst is located in a thermally insulating support suspended relative to the convective cover.

17. System for monitoring and elimination of hydrogen, in accordance with claims 8 to 16, **characterised in that** as primary signal in the monitoring sector use is made of voltage thermocouples, in accordance with the temperature of the incoming heated air flow and the catalytic solid.

18. System for monitoring and elimination of hydrogen, in accordance with claims 8 to 17, **characterised in that** as primary signal in the monitoring detector use is made of voltage thermocouples, according to the temperature of the incoming heated air flow and the outgoing gas flow.

19. System for monitoring and elimination of hydrogen, in accordance with claims 8 to 18, **characterised in that** in the monitoring detector, cold junction thermocouple thermostat connections are employed.

FIG.1

EP 1 279 640 A1

FIG.2

8

FIG.3

## INTERNATIONAL SEARCH REPORT

| International application No. |
| --- |
| PCT/ES 00/00117 |

| A. CLASSIFICATION OF SUBJECT MATTER |
| --- |
| IPC$^7$ C01B 3/58, A61L 9/00 |
| According to International Patent Classification (IPC) or to both national classification and IPC |

| B. FIELDS SEARCHED |
| --- |
| Minimum documentation searched (classification system followed by classification symbols) |
| IPC$^7$ C01B 3/58, A61L 9/00 |
| Documentation searched other than minimum documentation to the extent that such documents are included in the fields searched |
| Electronic data base consulted during the international search (name of data base and, where practicable, search terms used) |
| WPI, EPODOC, CIBEPAT, |

### C. DOCUMENTS CONSIDERED TO BE RELEVANT

| Category* | Citation of document, with indication, where appropriate, of the relevant passages | Relevant to claim No. |
| --- | --- | --- |
| X | US 4078893 A (GILMAN et al.) 14 March 1978 (14.03.78) Claims | 1,3,9 |
| A | EP 089183 A (CJB DEVELOPMENTS LTD.) 21 September 1983 (21.09.83) pages 6-8 | 1-19 |
| A | EP 0980705 A (KABUSHIK,KAISHA T.) 23 February 2000 (23.02.00) claims 1 and 6 | 1-19 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 June 2000 (30.06.00) | 18 August 2000 (18.08.00) |

| Name and mailing address of the ISA/    S.P.T.O. | Authorized officer |
| --- | --- |
| Facsimile No. | Telephone No. |

Form PCT/ISA/210 (second sheet) (July 1992)

## INTERNATIONAL SEARCH REPORT
Information on patent family members

| International Application No |
| --- |
| PCT/ES 00/00117 |

| Patent document cited in search report | Publication date | Patent familiy member(s) | Publication date |
| --- | --- | --- | --- |
| US 4078893 A | 14.03.1978 | NONE | NONE |
| EP 089183 A | 21.09.1983 | AU 1199683 A<br>BR 8301206 A<br>JP 58217542 A<br>CA 1195028 A | 15.09.1983<br>22.11.1983<br>17.12.1983<br>08.10.1985 |
| EP 0980705 A | 23.02.2000 | CN 1250215 A<br>JP 2000098075 | 12.04.2000<br>07.04.2000 |

Form PCT/ISA/210 (patent family annex) (July 1992)